# EUROPÄISCHE PATENTSCHRIFT

(11) **EP 3 197 816 B1**
(45) Veröffentlichungstag und Bekanntmachung des Hinweises auf die Patenterteilung: **27.02.2019**
(21) Anmeldenummer: 15784563.7
(22) Anmeldetag: 21.09.2015
(51) Int. Cl.: B66F 9/075, B66C 13/40, G05G 9/047

(54) **BEDIENVORRICHTUNG**
OPERATING DEVICE
DISPOSITIF DE COMMANDE

(30) Priorität: 23.09.2014 DE 202014007585 U
(43) Veröffentlichungstag der Anmeldung: 02.08.2017
(73) Patentinhaber: Haug, Thomas, 75217 Birkenfeld (DE)
(72) Erfinder: Haug, Thomas, 75217 Birkenfeld (DE)
(74) Vertreter: Wacker, Jost Oliver
(86) Internationale Anmeldenummer: PCT/EP2015/001869
(87) Internationale Veröffentlichungsnummer: WO 2016/045781

(56) Entgegenhaltungen:
- EP-A1- 2 080 728
- DE-U1-202008 008 445
- "HH MFSHL Lightweight & Sturdy Competitively Priced Fully Programmable Several Standards", , 15. September 2014 (2014-09-15), XP055237620, Gefunden im Internet: URL:https://web.archive.org/web/2014091519 5052/http://www.hetronic.com/hetronic/Docu ments/Brochures/BROC_HH_001.1 no crops-low-res_p.1-2.pdf [gefunden am 2015-12-18]

## Beschreibung

Die Erfindung betrifft eine tragbare Bedienvorrichtung, insbesondere in Form einer Fernsteuerungsvorrichtung für Hub- und Industriegeräte, nach dem Oberbegriff des Anspruchs 1. Die Bedienvorrichtung weist eine Gehäuseanordnung mit einem Aufnahmegehäuse für die Aufnahme von Bedienelementen und einer Steuerelektronik, einem sich vom Aufnahmegehäuse weg erstreckenden Gehäusegriff sowie mit einem Schutzbügel auf. Der Schutzbügel erstreckt sich dabei von einem vom Aufnahmegehäuse abgewandten Ende des Gehäusegriffes zum Aufnahmegehäuse und deckt dadurch den Gehäusegriff wenigstens zu einer Seite hin nach außen ab.

Derartige in der Hand gehaltene Bedienvorrichtungen sind zur Bedienung insbesondere mobiler Hub- und Industriegeräte heutzutage weit verbreitet. Beispielsweise ist unter der Bezeichnung HH MFSHL eine derartige Bedienvorrichtung der Firma HETRONIC am Markt erhältlich. Auch diese weist einen sich vom hinteren Ende des Gehäusegriffes bis zu einem Elektronikgehäuse erstreckenden Schutzbügel auf, mittels dem ein am Gehäusegriff angeordnetes Bedienelemente oder aber eine den Gehäusegriff haltende Hand des Bedieners abgeschirmt werden kann. Darüber hinaus kann der Schutzbügel als Standmittel zum Abstellen der Bedienvorrichtung genutzt werden.

Nachteilig an der bekannten Bedienvorrichtung ist, dass der Schutzbügel nur einen wenig stabilen Stand der abgestellten Bedienvorrichtung ermöglicht und sich dessen Schutzfunktion auch nur auf einen sehr begrenzten Bereich der Bedienvorrichtung erstreckt.

Die Aufgabe der Erfindung ist es, bei einer gattungsgemäßen Bedienvorrichtung die genannten Nachteile zu vermeiden und die Sicherheitsfunktion des Schutzbügels auszuweiten.

Diese Aufgabe wird durch eine Bedienvorrichtung mit den Merkmalen des Anspruchs 1 gelöst. Dabei weist der Schutzbügel insbesondere über einen sich im Wesentlichen parallel zum Gehäusegriff erstreckenden Abschnitt wenigstens bereichsweise zwei zueinander beabstandete Teilbügel auf. Hierdurch ist es möglich, die Bedienvorrichtung in besonders stabiler Weise über den Schutzbügel auf einem Untergrund abzustellen, insbesondere dann, wenn zwischen den beiden Teilbügeln ein relativ großer Abstand vorgesehen ist. Hierdurch kann ein besonders kippsicherer Stand der Bedienvorrichtung gewährleistet werden, der durch wenigstens drei relativ weit auseinander liegende Lagerpunkte erzielt wird, so dass die Lagerung in statisch bestimmter oder überbestimmter Weise erfolgt. Darüber hinaus stehen auf diese Weise weitere nach außen hin geschützte Bereiche, die beispielsweise zwischen den Teilbügeln angeordnet sind, zur Verfügung, in denen insbesondere weitere Bedienteile untergebracht werden können.

In einer besonders vorteilhaften Ausführungsform ist an den Teilbügeln wenigstens eine Magnetaufnahme für einen Magnet eingelassen. Hierdurch können an den Teilbügeln magnetische Anziehungskräfte erzeugt werden, die eine besonders stabile Lagerung der Bedienvorrichtung ermöglichen, wenn diese auf einem metallischen Untergrund abgestellt wird. Auf diese Weise kann verhindert werde, dass die Bedienvorrichtung beim Abstellen beziehungsweise im abgestellten Zustand umkippt und dabei beschädigt wird. Zudem kann die Bedienvorrichtung auf diese Weise auch an einer schrägen oder senkrechten metallischen Fläche befestigt werden, ohne abzurutschen.

Dabei ist es günstig, wenn die wenigstens eine Magnetaufnahme sacklochförmig in den jeweiligen Teilbügel eingelassen ist, wodurch eine besonders einfache und dauerhafte Befestigung des Magneten und gegebenenfalls ein dichtes Verschließen der Magnetaufnahme möglich sind. Alternativ hierzu wäre es zudem möglich, den wenigstens einen Magnet beim Herstellen der Teilbügel mit deren Herstellungsmaterial zu umspritzen. In jedem Fall ist hierbei sichergestellt, dass der oder die Magnete beim Abstellen der Bedienvorrichtung nur unter Zwischenlage einer verbleibenden Materialschicht der Teilbügel mit dem Untergrund zusammen wirkt, so dass sie zumindest nicht direkt vom Untergrund mechanisch beaufschlagt und dadurch beispielsweise abgebrochen werden können.

Vorteilhafterweise ist in den Gehäusegriff eine Batterieaufnahme integriert, wodurch eine kompaktere Ausführung des als Elektronikaufnahme dienenden Aufnahmegehäuses möglich ist. Zudem kann hierdurch eine ausgewogenere Gewichtsverteilung innerhalb der Bedienvorrichtung erzielt werden. Insgesamt kann die Bedienvorrichtung hierdurch komfortabler gehandhabt werden.

Vorteilhafterweise ist zwischen den Teilbügeln wenigstens ein Aufnahmebereich für ein weiteres Element vorgesehen. Auf diese Weise ist es möglich, wenigstens ein Bau- oder Funktionselement der Bedienvorrichtung in einem Bereich der Bedienvorrichtung zu positionieren, in dem dieses gleichzeitig zu mehreren Seiten nach außen hin durch den Schutzbügel abgeschirmt wird.

Hierbei ist es günstig, wenn das im Aufnahmebereich angeordnete weitere Element durch einen benachbart zum Ende des Gehäusegriffes rückseitig angeordneten Notausschalter gebildet ist. Auf diese Weise kann der Notausschalter beabstandet zu den übrigen Bedienelementen der Bedienvorrichtung positioniert werden, um eine versehentliche Betätigung weitestgehend ausschließen zu können. Gleichzeitig ist in dieser Position jederzeit eine rasche Betätigung des Notausschalters von der Rückseite der Bedienvorrichtung möglich, um einen Betriebsvorgang eines angesteuerten Hub- oder Industriegerätes nötigenfalls in kurzer Zeit abbrechen zu können.

Alternativ oder zusätzlich hierzu kann das im Aufnahmebereich angeordnete weitere Element auch durch eine Batterieaufnahme gebildet sein. Diese kann wiederum alternativ zu der beispielsweise im Gehäusegriff untergebrachten Batterieaufnahme oder zusätzlich zu dieser vorgesehen sein. Hierdurch ist es einerseits möglich die Gewichte innerhalb der Bedienvorrichtung so zu verteilen, dass diese komfortabel gehandhabt werden kann. Andererseits kann auf diese Weise die Kapazität der in der Bedienvorrichtung mitgeführten Batterien deutlich erhöht werden.

Vorteilhafterweise ist an einem Boden des Aufnahmegehäuses ein alternativer oder zusätzlicher Notausschalter angeordnet, der sich senkrecht zum Boden innerhalb eines Projektionsbereichs zwischen den Konturen der Teilbügel erstreckt. Hierdurch ist es für den Benutzer möglich, den Notausschalter beispielsweise gegen den Oberschenkel zu pressen, um diesen auch mit nur einer Hand auslösen zu können. Dabei kann durch die spezielle Anordnung gegenüber den Teilbügeln sichergestellt werden, dass der Notausschalter beim Abstellen oder Herunterfallen der Bedienvorrichtung nicht versehentlich betätigt wird.

Ferner ist es günstig, wenn an dem Gehäusegriff ein insbesondere proportional arbeitender Drücker vorgesehen ist. Durch diese Positionierung des Drückers ist dieser besonders gut nach außen hin geschützt, wodurch eine versehentliche Betätigung desselben, wie beispielsweise im Falle eines Sturzes oder eines Verkantens weitestgehend ausgeschlossen werden kann.

In einer weiteren vorteilhaften Ausführungsform wirkt der Drücker mit einem Hallsensor zusammen, was eine leichtere Verbindung des am Gehäusegriff gehaltenen Drückers mit der im Aufnahmegehäuse aufgenommenen angesteuerten Elektronik ermöglicht.

Ferner ist es günstig, wenn an dem Gehäusegriff ein Totmannschalter vorgesehen ist, durch den ein Steuerungsvorgang abgebrochen wird, sobald keine Betätigung des Schalters erfolgt.

In einer weiteren vorteilhaften Ausführungsform der Bedienungsvorrichtung ist an dem Aufnahmegehäuse ein Display aufgenommen. Auf diese Weise können dem Benutzer der Bedienvorrichtung weitere Informationen oder Bedienungsmöglichkeiten zur Verfügung gestellt werden.

Ferner ist es günstig, wenn die Gehäuseanordnung zumindest in ihren wesentlichen Teilen aus einem Kunststoff hergestellt ist, wodurch auch relativ komplexe Formen kostengünstig hergestellt werden können.

Zudem ist es dabei vorteilhaft, wenn der Kunststoff dabei durch einen thermoplastischen Elastomer gebildet ist. Auf diese Weise ist die Gehäuseanordnung relativ unempfindlich gegenüber mechanischen Beanspruchungen, wie beispielweise beim Fall aus einer im üblichen Gebrauch möglichen Höhe. Zudem können auf diese Weise auch die innerhalb des Gehäuses aufgenommenen Elemente, wie insbesondere Elektronikbauteile besonders gut gegen Beanspruchungen von außen geschützt werden.

Ferner ist es günstig, wenn am Gehäusegriff ein Anlegebereich vorgesehen ist, an den die Finger einer die Bedienvorrichtung haltenden Hand angelegt werden können, wobei am Schutzbügel ein dem Anlegebereich gegenüber liegender Gegenanlegebereich ausgebildet ist. Der Gegenanlegebereich kann dabei stegartig vom Schutzbügel abstehen oder alternativ hierzu in den Schutzbügel integriert sein. Dabei ist der Gegenanlegebereich beispielsweise im Bereich des kleinen Fingers der haltenden Hand angeordnet, so dass durch diesen eine Kippbewegung der Bedienvorrichtung, insbesondere nach vorne um den Zeigefinger herum, unterbunden werden kann.

In den Figuren ist eine beispielhafte Ausführungsform der Erfindung dargestellt. Es zeigen:
- Figur 1: eine perspektivische Ansicht einer erfindungsgemäßen Bedienvorrichtung,
- Figur 2: eine perspektivische Ansicht einer Gehäuseanordnung der Bedienvorrichtung nach Fig. 1 und
- Figur 3: einen Schnitt durch die Gehäuseanordnung nach Fig. 2.

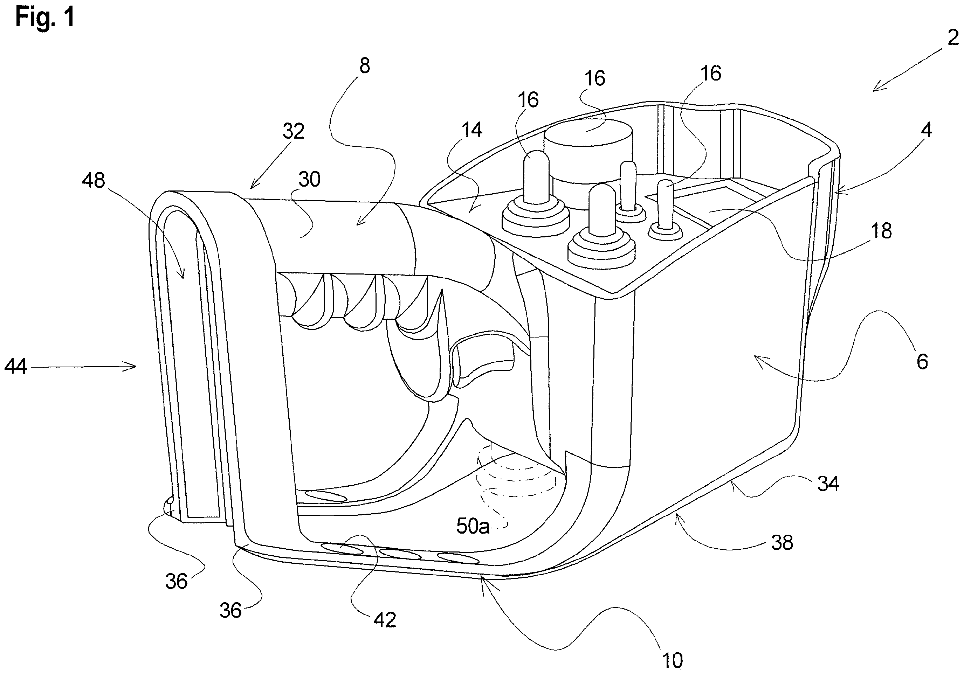

Die Fig. 1 zeig eine Bedienvorrichtung 2 in Form einer Fernsteuerungsvorrichtung, wie beispielsweise für einen Kran. Diese weist eine Gehäuseanordnung 4 auf, die sich im Wesentlichen aus einem Aufnahmegehäuse 6, einem Gehäusegriff 8 und einem Schutzbügel 10 zusammensetzt. Die Gehäuseanordnung 4 ist dabei zumindest zu wesentlichen Teilen aus einem Kunststoff, wie beispielsweise einem thermoplastischen Elastomer hergestellt.

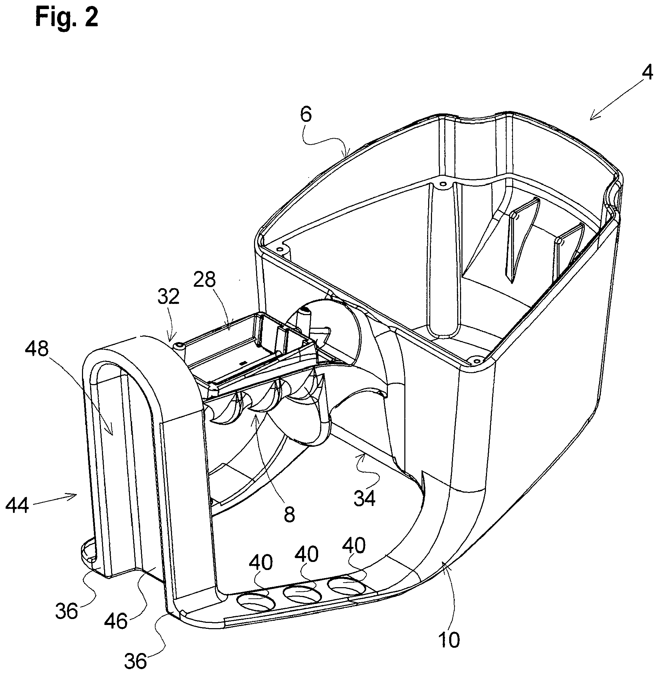

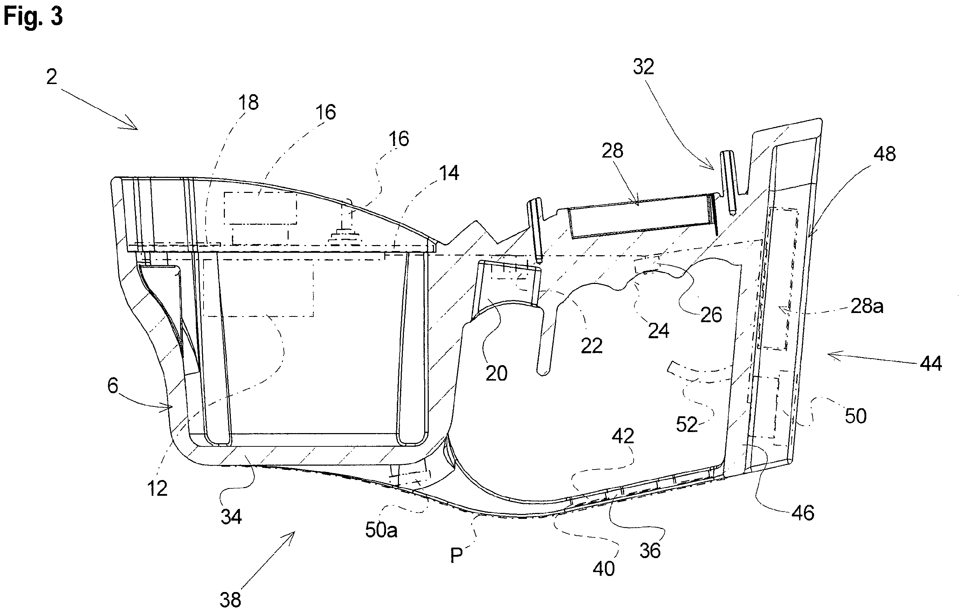

Wie insbesondere aus den Figuren 2 und 3 zu entnehmen ist, ist das Aufnahmegehäuse 6 dabei kastenförmig ausgebildet und dient zur geschützten Unterbringung von Elektro- und Elektronikbauteilen einer Steuerungselektronik 12, wie in Fig. 3 durch strichpunktierte Linien dargestellt. Zudem sind an einer Lagerplatte 14, die das Aufnahmegehäuse 6 von oben verschließt, mehrere Bedienungselemente 16 gelagert, die unter anderem zwei Joysticks umfassen. Zudem kann an der Lagerplatte 14 ein Display 18 vorgesehen sein, mittels dem einem Benutzer verschiedene Informationen wie beispielsweise Betriebszustände angezeigt werden können, wie insbesondere aus Fig. 1 zu entnehmen ist.

An dem Gehäusegriff 8, der vom Aufnahmegehäuse 6 abragt, ist ein Drücker 20 derart angeordnet, dass er mit dem Zeigefinger einer den Gehäusegriff 8 haltenden Hand betätigt werden kann (nicht dargestellt). Der Drücker 20 kann dabei beispielsweise als proportional arbeitender Schalter ausgebildet sein, der in Abhängigkeit davon, wie weit der Drücker 20 betätigt ist, ein jeweiliges Steuerungssignal generiert. Zu diesem Zweck kann an dem Drücker 20 beispielsweise eine Hallsensoreinrichtung 22 vorgesehen sein, die mit der Steuerungselektronik 12 in Verbindung steht, wie in Fig. 3 dargestellt. Ferner kann an dem Gehäusegriff 8 beispielsweise an einem für die haltenden Mittel-, Ring- und Kleinem-Finger vorgesehenen Anlegebereich 24 zusätzlich ein Totmannschalter 26 vorgesehen sein, der ebenfalls mit der Steuerungselektronik 12 in Verbindung steht.

Wie insbesondere aus den Fig. 2 und 3 zu entnehmen ist, kann in den Gehäusegriff 8 zudem eine Batterieaufnahme 28 integriert sein, die durch einen Deckel 30 verschließbar ist, wie in Fig. 1 dargestellt.

Der Schutzbügel 10 verbindet ein vom Aufnahmegehäuse 6 abgewandtes Ende 32 des Gehäusegriffs 8 mit einem Boden 34 des Aufnahmegehäuses 6 und erstreckt sich dabei abschnittsweise im Wesentlichen parallel zum Gehäusegriff 8. Dabei bildet der Schutzbügel 10 zwei Teilbügel 36 aus, die zumindest abschnittsweise zueinander beabstandet sind. Hierdurch bilden die Teilbügel 36 zusammen mit dem Boden 34 einen gemeinsamen Standbereich 38, über den die Bedienvorrichtung 2 mit wenigstens drei relativ weit auseinander liegenden Lagerpunkten und damit kippsicher auf einem Untergrund abgestellt werden kann.

Wie ferner aus Fig. 2 zu entnehmen ist, sind in die Teilbügel 36 zudem mehrere Magnetaufnahmen 40 eingelassen, die als Sacklöcher ausgebildet sind. Hierdurch kann in die Magnetaufnahmen 40 jeweils ein zylindrischer Magnet 42 eingeklebt werden, der bodenseitig durch eine verbleibende Materialschicht des jeweiligen Teilbügels 36 geschützt ist (siehe Fig. 3).

Zudem sind die beiden Teilbügel 36 an einer Rückseite 44 der Gehäuseanordnung 4 derart parallel zu einander geführt und durch eine Wand 46 miteinander verbunden, dass sie einen Aufnahmebereich 48 für die rückseitige Anordnung eines wenigstens eines weiteren Bau- oder Funktionselementes bilden. Auf diese Weise ist es beispielsweise möglich, in dem Aufnahmebereich 48 einen Notausschalter 50 oder eine alternative oder zusätzliche Batterieaufnahme 28a geschützt unterzubringen, wie in Fig. 3 durch strichpunktierte Linien dargestellt. Der Aufnahmebereich 48 ist dabei von der Rückseite 44 der Bedienvorrichtung 2 her zugänglich. Im Falle des hier vorgesehenen Notausschalters 50 kann dieser somit von der Rückseite her betätigt werden, um einen Steuerungsvorgang im Notfall abrupt abbrechen zu können.

Alternativ oder zusätzlich hierzu kann auch am Boden 34 ein Notausschalter 50a vorgesehen werden, der sich innerhalb des Projektionsbereichs P zwischen den beiden Teilbügeln 36 erstreckt, wie in Fig. 3 durch strichpunktierte Linien dargestellt. Durch diese Anordnung des Notausschalters 50a kann eine versehentliche Betätigung beim Abstellen oder Herunterfallen der Bedienvorrichtung 2 verhindert werden.

Wie aus Fig. 3 ferner zu entnehmen ist, kann an dem Schutzbügel 10 zudem ein dem Anlegebereich 24 gegenüber liegender Gegenanlegebereich 52 vorgesehen sein, wie durch strichpunktierte Linien dargestellt, gegen den beispielsweise ein kleiner Finger einer die Bedienvorrichtung 2 haltenden Hand angelegt werden kann (nicht dargestellt). Auf diese Weise kann eine beispielsweise um den Bereich des Drückers 20 beziehungsweise um den Zeigefinger der haltenden Hand herum auftretende Kippbewegung der Bedienvorrichtung leichter unterbunden werden. Alternativ zu der dargestellten stegartigen Ausbildung des Gegenlagerbereichs 52 kann dieser dabei beispielsweise auch in den Schutzbügel 10 integriert sein.

## Patentansprüche

1. Tragbare Bedienvorrichtung (2), insbesondere in Form einer Fernsteuerungsvorrichtung für Hub- und Industriegeräte,
mit einer Gehäuseanordnung (4), die ein Aufnahmegehäuse (6) für die Aufnahme einer Steuerelektronik (12), einen sich vom Aufnahmegehäuse (6) weg erstreckenden Gehäusegriff (8) sowie einen Schutzbügel (10) aufweist, der sich von einem vom Aufnahmegehäuse (6) abgewandten Ende (32) des Gehäusegriffes (8) zum Aufnahmegehäuse (6) erstreckt und dabei den Gehäusegriff (8) wenigstens zu einer Seite hin abdeckt,
**dadurch gekennzeichnet, dass** der Schutzbügel (10) wenigstens bereichsweise zwei zueinander beabstandete Teilbügel (36) aufweist.

2. Bedienvorrichtung nach Anspruch 1, **dadurch gekennzeichnet, dass** an den Teilbügeln (36) wenigstens eine Magnetaufnahme (40) für einen Magnet (42) eingelassen ist.

3. Bedienvorrichtung nach Anspruch 2, **dadurch gekennzeichnet, dass** die wenigstens eine Magnetaufnahme (40) sacklochförmig in den jeweiligen Teilbügel (36) eingelassen ist.

4. Bedienvorrichtung nach einem der Ansprüche 1 bis 3, **dadurch gekennzeichnet, dass** in den Gehäusegriff (8) eine Batterieaufnahme (28) integriert ist.

5. Bedienvorrichtung nach einem der Ansprüche 1 bis 4, **dadurch gekennzeichnet, dass** zwischen den Teilbügeln (36) wenigstens ein Aufnahmebereich (48) für ein weiteres Element vorgesehene ist.

6. Bedienvorrichtung nach Anspruch 5, **dadurch gekennzeichnet, dass** das im Aufnahmebereich (48) angeordnete weitere Element durch einen rückseitig angeordneten Notausschalter (50) gebildet ist.

7. Bedienvorrichtung nach Anspruch 4 oder 5, **dadurch gekennzeichnet, dass** das im Aufnahmebereich (48) angeordnete weitere Element durch eine alternative oder zusätzliche Batterieaufnahme (28a) gebildet ist.

8. Bedienvorrichtung nach einem der Ansprüche 1 bis 7, **dadurch gekennzeichnet, dass** an einem Boden (34) des Aufnahmegehäuses (36) innerhalb einer Kontur der Teilbügel (36) ein Notausschalter (50a) angeordnet ist.

9. Bedienvorrichtung nach einem der Ansprüche 1 bis 8, **dadurch gekennzeichnet, dass** an dem Gehäusegriff (8) ein vorzugsweise proportional arbeitender Drücker (20) vorgesehen ist.

10. Bedienvorrichtung nach Anspruch 9, **dadurch gekennzeichnet, dass** der (20) Drücker mit einem Hallsensor zusammen wirkt.

11. Bedienvorrichtung nach einem der Ansprüche 1 bis 10, **dadurch gekennzeichnet, dass** an dem Gehäusegriff (8) ein Totmannschalter (26) vorgesehen ist.

12. Bedienvorrichtung nach einem der Ansprüche 1 bis 11, **dadurch gekennzeichnet, dass** an dem Aufnahmegehäuse (6) ein Display (18) aufgenommen ist.

13. Bedienvorrichtung nach einem der Ansprüche 1 bis 12, **dadurch gekennzeichnet, dass** die Gehäuseanordnung (4) aus einem Kunststoff hergestellt ist.

14. Bedienvorrichtung nach Anspruch 13, **dadurch gekennzeichnet, dass** der Kunststoff durch einen thermoplastischen Elastomer gebildet ist.

15. Bedienvorrichtung nach einem der Ansprüche 1 bis 14, **dadurch gekennzeichnet, dass** am Gehäusegriff (8) ein Anlegebereich (24) für die teilweise Anlage der Finger einer die Bedienvorrichtung (2) haltenden Hand vorgesehen ist und am Schutzbügel (10) ein dem Anlegebereich (24) gegenüber liegender Gegenanlegebereich (52) ausgebildet ist.

## Claims

1. Portable operating device (2), in particular in the form of a remote control device for lifting and industrial appliances, having a housing arrangement (4), which has an accommodating housing (6) for accommodating control electronics (12), a housing handle (8) which extends away from the accommodating housing (6), and a protective bracket (10), which extends from an end (32), which is averted from the accommodating housing (6) of the housing handle (8) to the accommodating housing (6) and which, in so doing, covers the housing handle (8) at least to one side,
**characterised in that** the protective bracket (10) comprises at least two bracket parts (36) which at least in regions are spaced apart from one another.

2. Operating device according to claim 1, **characterised in that** at least one magnet accommodation (40) for a magnet (42) is embedded at the bracket parts (36).

3. Operating device according to claim 2, **characterised in that** the at least one magnet accommodation (40) is embedded in the form of a blind hole in the respective bracket part (36).

4. Operating device according to any one of claims 1 to 3, **characterised in that** a battery accommodation (28) is integrated in the housing handle (8).

5. Operating device according to any one of claims 1 to 4, **characterised in that** at least one accommodating region (48) for a further element is provided between the bracket parts (36).

6. Operating device according to claim 5, **characterised in that** the further element arranged in the accommodating region (48) is formed by an emergency stop switch (50) arranged on the rear side.

7. Operating device according to any one of claims 4 or 5, **characterised in that** the further element arranged in the accommodating region (48) is formed by an alternative or additional battery accommodation (28a).

8. Operating device according to any one of claims 1 to 7, **characterised in that** an emergency stop switch (50a) is arranged at a base (34) of the accommodating housing (6) inside a contour of the bracket part (36).

9. Operating device according to any one of claims 1 to 8, **characterised in that** a trigger (20), preferably proportionately operating, is provided at the housing handle (8).

10. Operating device according to claim 9, **characterised in that** the trigger (20) interacts with a Hall sensor.

11. Operating device according to any one of claims 1 to 10, **characterised in that** a dead man's switch (26) is provided at the housing handle (8).

12. Operating device according to any one of claims 1 to 11, **characterised in that** a display (18) is accommodated in the accommodating housing (6).

13. Operating device according to any one of claims 1 to 12, **characterised in that** the housing arrangement (4) is made of plastic.

14. Operating device according to claim 13, **characterised in that** the plastic is formed by a thermoplastic elastomer.

15. Operating device according to any one of claims 1 to 14, **characterised in that** a contact region (24) is provided at the housing handle (8) for the partial contact of the fingers of a hand holding the operating device (2), and a counter-contact region (52), located opposite the contact region (24), is formed at the protective bracket (10).

## Revendications

1. Dispositif de commande portatif (2), en particulier sous la forme d'un dispositif de télécommande pour des appareils de levage et des appareils industriels,
comprenant un ensemble boîtier (4), qui comprend un boîtier de logement (6) pour loger une électronique de commande (12), une poignée de boîtier (8) s'étendant à partir du boîtier de logement (6) et un arceau protecteur (10) qui s'étend à partir d'une extrémité (32) opposée au boîtier de logement (6) de la poignée de boîtier (8) vers le boîtier de logement (6) et recouvre la poignée de boîtier (8) sur au moins un côté,
**caractérisé en ce que** l'arceau protecteur (10) comprend au moins, par endroits, deux parties d'arceau (36) à distance l'une de l'autre.

2. Dispositif de commande selon la revendication 1, **caractérisé en ce qu'**au moins un logement d'aimant (40) destiné à recevoir un aimant (42) est réalisé sur les parties d'arceau (36).

3. Dispositif de commande selon la revendication 2, **caractérisé en ce que** l'au moins un logement d'aimant (40) est réalisé en forme de trou borgne dans chaque partie d'arceau (36).

4. Dispositif de commande selon l'une des revendications 1 à 3, **caractérisé en ce qu'**un logement de batterie (28) est intégré dans la poignée de boîtier (8).

5. Dispositif de commande selon l'une des revendications 1 à 4, **caractérisé en ce qu'**au moins une zone de logement (48) est prévue entre les parties d'arceau (36) pour recevoir un élément supplémentaire.

6. Dispositif de commande selon la revendication 5, **caractérisé en ce que** l'élément supplémentaire agencé dans la zone de logement (48) est formé par un interrupteur d'arrêt d'urgence (50) agencé en face arrière.

7. Dispositif de commande selon la revendication 4 ou 5, **caractérisé en ce que** l'élément supplémentaire agencé dans la zone de logement (48) est formé par un logement de batterie (28a) supplémentaire ou alternatif.

8. Dispositif de commande selon l'une des revendications 1 à 7, **caractérisé en ce qu'**un interrupteur d'arrêt d'urgence (50a) est agencé sur un fond (34) du boîtier de logement (6) à l'intérieur d'un contour des parties d'arceau (36).

9. Dispositif de commande selon l'une des revendications 1 à 8, **caractérisé en ce qu'**un bouton poussoir (20), de préférence proportionnel, est prévu sur la poignée de boîtier (8).

10. Dispositif de commande selon la revendication 9, **caractérisé en ce que** le bouton poussoir (20) coopère avec un capteur à effet Hall.

11. Dispositif de commande selon l'une des revendications 1 à 10, **caractérisé en ce qu'**un interrupteur homme mort (26) est prévu sur la poignée de boîtier (8).

12. Dispositif de commande selon l'une des revendications 1 à 11, **caractérisé en ce qu'**un écran (18) est reçu sur le boîtier de logement (6).

13. Dispositif de commande selon l'une des revendications 1 à 12, **caractérisé en ce que** l'ensemble boîtier (4) est fabriqué en matière plastique.

14. Dispositif de commande selon la revendication 13, **caractérisé en ce que** la matière plastique est formée par un élastomère thermoplastique.

15. Dispositif de commande selon l'une des revendications 1 à 14, **caractérisé en ce qu'**une zone d'application (24) pour la pose partielle de doigts d'une main tenant le dispositif de commande (2) est prévue sur la poignée de boîtier (8) et une zone de contre application (52) opposée à la zone d'application (24) est réalisée sur l'arceau protecteur (10).
